(19) Europäisches Patentamt European Patent Office Office européen des brevets

(11) **EP 3 191 401 B1**

(12) **FASCICULE DE BREVET EUROPEEN**

(45) Date de publication et mention de la délivrance du brevet:
**17.08.2022  Bulletin 2022/33**

(21) Numéro de dépôt: **15771199.5**

(22) Date de dépôt: **10.09.2015**

(51) Classification Internationale des Brevets (IPC):
**C01B 39/20** (2006.01)  **C01B 39/22** (2006.01)
**C01B 39/24** (2006.01)  **B01J 20/18** (2006.01)
**B01D 53/02** (2006.01)

(52) Classification Coopérative des Brevets (CPC):
**B01J 20/183; B01D 53/02; B01J 20/18;**
**C01B 39/20; C01B 39/205; C01B 39/22;**
**C01B 39/24;** B01D 2253/1085

(86) Numéro de dépôt international:
**PCT/FR2015/052412**

(87) Numéro de publication internationale:
**WO 2016/038307 (17.03.2016 Gazette 2016/11)**

(54) **AGRÉGATS DE NANOCRISTAUX DE ZÉOLITHES**

NANOKRISTALLAGGREGATE AUS ZEOLITHE

ZEOLITE NANOCRYSTAL AGGREGATES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **12.09.2014  FR 1458592**

(43) Date de publication de la demande:
**19.07.2017  Bulletin 2017/29**

(73) Titulaire: **ARKEMA FRANCE**
**92700 Colombes (FR)**

(72) Inventeurs:
• **NICOLAS, Serge**
  **F-64000 Pau (FR)**
• **ORTIZ, Guillaume**
  **F-64000 Pau (FR)**
• **BOUVIER, Ludivine**
  **F-64300 Orthez (FR)**
• **LUTZ, Cécile**
  **F-64290 Gan (FR)**

(74) Mandataire: **Arkema Patent**
**Arkema France**
**DRD-DPI**
**420, rue d'Estienne d'Orves**
**92705 Colombes Cedex (FR)**

(56) Documents cités:
**WO-A1-2015/028740      WO-A2-2015/019013**
**CN-A- 103 214 003**

• **BAOYU LIU ET AL: "Synthesis and structural properties of hierarchically structured aluminosilicates with zeolite Y (FAU) frameworks", RSC ADVANCES, vol. 3, no. 35, 1 janvier 2013 (2013-01-01), page 15075, XP055116926, ISSN: 2046-2069, DOI: 10.1039/c3ra41862f**
• **JUNSU JIN ET AL: "Facile Synthesis of Mesoporous Zeolite Y with Improved Catalytic Performance for Heavy Oil Fluid Catalytic Cracking", INDUSTRIAL & ENGINEERING CHEMISTRY RESEARCH, vol. 53, no. 8, 26 février 2014 (2014-02-26), pages 3406-3411, XP055117134, ISSN: 0888-5885, DOI: 10.1021/ie403486x**

EP 3 191 401 B1

**Description**

La présente invention concerne le domaine des zéolithes, particulièrement les zéolithes sous forme de cristaux de très petites tailles, plus particulièrement les zéolithes sous forme de cristaux de tailles nanométriques. La présente invention concerne également le procédé de préparation de telles zéolithes sous forme de cristaux de tailles nanométriques, ainsi que leur utilisation pour préparer des adsorbants zéolithiques par agglomération avec un liant.

Le recours à des cristaux de zéolithe de très faibles dimensions, notamment nanométriques, a un fort intérêt lorsque d'excellentes propriétés de transfert sont recherchées. Il existe aujourd'hui principalement trois méthodes de synthèses pour obtenir des cristaux de faibles tailles, comme l'enseignent de nombreuses publications (voir par exemple T. Tago et T. Masuda, Zeolite Nanocrystals - Synthesis and Applications, chapitre 8, « Nanocrystals », Ed. INTECH, (2010), 326 pages, ou encore Vuong-Gia Thanh, mémoire de thèse « Synthesis and characterization of nanozeolites », décembre 2006, université de Laval, Québec).

Ces trois méthodes de synthèses peuvent être résumées comme suit :

1) la synthèse en milieu très dilué et à basse température, la plupart du temps inférieure à la température ambiante ; ces techniques ont l'inconvénient d'être longues et peu économiques sur le plan industriel ;
2) la synthèse dans des espaces confinés tels que les pores de matrices carbonées, des gouttelettes de microémulsion, des hydrogels de polymères, et autres ; et
3) la synthèse avec des inhibiteurs de croissance, éventuellement en présence d'un solvant organique, introduits dans le mélange réactionnel après la phase de mûrissement et visant à limiter la croissance des cristaux ; ces procédés sont peu économiques en raison de durées de synthèse assez longues ; T. Tago et coll. (*ibid.*) proposent par exemple des tensioactifs non ioniques tels que des éthers dérivés de polyoxyéthylène ou des tensioactifs ioniques tels que le bromure de cétyltriméthylammonium (CTAB), ou le bis(2-éthylhexyl)sulfosuccinate de sodium (AOT) qui entraînent des durées de synthèse assez longues, de l'ordre de plusieurs jours.

La demande de brevet JP2009155187 enseigne quant à elle la synthèse d'une zéolithe colloïdale de type faujasite (FAU) de ratio $SiO_2/Al_2O_3$ compris entre 2 et 6, présentant une bipopulation de particules de premier diamètre moyen compris entre 20 nm et 200 nm et de second diamètre moyen compris entre 20 nm et 800 nm, le rapport de ces diamètres moyens variant de 1 à 5, et la constante de réseau (UD) étant comprise entre 24,60 Ångström et 24,90 Ångström. Le but recherché dans cette demande est l'obtention de cristaux très faiblement agglomérés.

Le brevet JP2008230886 présente la synthèse de particules de petites dimensions relativement uniformes par ensemencement avec une solution transparente de nuclei, c'est-à-dire de nuclei de très faibles tailles, obtenus après un temps très long de mûrissement, *i.e.* supérieur à 100 heures. Ce procédé paraît donc pour cette raison peu économique et difficilement envisageable sur le plan industriel.

La synthèse, la filtration et la manipulation de ce type de solides de dimensions nanométriques, sont toutefois difficiles, en raison non seulement des faibles dimensions desdits solides, mais aussi en raison de leur faible densité.

Des tentatives pour rendre la manipulation de tels solides de tailles nanométriques moins difficile sont illustrées par exemple dans le document US2012100066 qui enseigne un moyen de récupérer des nanocristaux de zéolithe par une centrifugation suivie d'une phase de mise en contact avec une solution qui permet l'agglomération des cristaux entre eux.

Certains auteurs enseignent que de tels objets zéolithiques de faibles dimensions peuvent être agrégés sous forme de particules secondaires plus aisément manipulables et qui conserveront des propriétés de transfert satisfaisantes. Ainsi par exemple, la demande de brevet US20120227584 propose des agrégats de nanocristaux de zéolithe FAU de diamètre moyen supérieur ou égal à 0,8 $\mu$m, le diamètre moyen des nanocristaux étant inférieur ou égal à 0,3 $\mu$m, et où au moins 80% des particules primaires (nanocristaux) sont agrégées. Ici encore, la synthèse, réalisée en milieu dilué, est longue, peu économique et par conséquent difficilement envisageable sur le plan industriel.

En outre, les objets zéolithiques doivent présenter une cristallinité importante, voire maximale, en termes de volume de Dubinin-Raduskevitch et de pureté de la phase cristalline obtenue par diffraction de rayons X (ou DRX).

Baoyu Liu et coll. décrivent dans RSC Advances, 2013, 3, 15075 sqq., et dans le document CN103214003, la synthèse et les propriétés structurales d'aluminosilicates à porosité hiérarchisée avec charpente de zéolithe Y (FAU). Cette zéolithe Y à porosité hiérarchisée qui possède des caractéristiques mésoporeuses et une structure cristalline microporeuse montre une importante activité catalytique ainsi qu'une résistance à la désactivation dans la réaction de condensation de l'aldol du benzaldéhyde avec l'alcool n-butylique.

Ces document ne décrivent que des aluminosilicates à charpente zéolithique de type Y, c'est-à-dire dont le ratio molaire Si/Al est supérieur à 1,5 et sont totalement silencieux en ce qui concerne les aluminosilicates à charpente zéolithique de type X, c'es-àdire dont le ratio molaire Si/Al est compris entre 1,0 et 1,4.

De même, les travaux de Junsu Jin et coll. (Ind. Eng. Chem. Res., (2014), 53, 3406-3411) concernent la synthèse de zéolithes Y mésoporeuses possédant des performances catalytiques améliorées dans les opération de craquage catalytique d'huiles lourdes. Ici encore aucune indication n'est fournie sur la synthèse de zéolithes X mésoporeuses.

Il reste donc aujourd'hui un besoin pour un procédé économique, facilement industrialisable, de synthèse d'agrégats de nanocristaux de zéolithe(s) présentant une cristallinité importante, voire maximale.

Les inventeurs ont maintenant découvert qu'il est possible de préparer de tels nanocristaux de zéolithe(s), lesdits nanocristaux étant obtenus sous forme d'agrégats et donc facilement manipulables, la préparation étant simple, rapide, économique et donc facilement adaptable à l'échelon industriel.

Ainsi, et selon un premier objet, la présente invention concerne un matériau zéolithique sous forme d'agrégats de nanocristaux de zéolithe(s) FAU présentant au moins les caractéristiques suivantes :

- rapport atomique Si/Al compris entre 1 et 1,4, bornes incluses,
- surface externe comprise entre 20 $m^2.g^{-1}$ et 80 $m^2.g^{-1}$, de préférence comprise entre 30 $m^2.g^{-1}$ et 80 $m^2.g^{-1}$, de préférence encore comprise entre 40 et 60 $m^2.g^{-1}$,
- diamètre moyen en nombre des nanocristaux compris entre 50 nm et 500 nm, de préférence entre 50 nm et 400 nm, de préférence encore entre 100 nm et 400 nm, plus préférentiellement entre 100 nm et 300 nm, bornes incluses, et
- taille moyenne en nombre des agrégats comprise entre 0,2 $\mu$m et 10 $\mu$m, de préférence entre 0,3 $\mu$m et 10 $\mu$m, de préférence encore entre 0,5 $\mu$m et 8 $\mu$m.

Selon un mode de réalisation préféré, les nanocristaux de zéolithe(s) selon la présente invention sont des nanocristaux de zéolithe(s) de type FAU, et notamment de zéolithe(s) choisie(s) parmi les zéolithes X, MSX et LSX. Par zéolithe MSX (Medium Silica X), on entend une zéolithe de type FAU présentant un ratio atomique Si/Al compris entre environ 1,05 et environ 1,15, bornes incluses. Par zéolithe LSX (Low Silica X), on entend une zéolithe de type FAU présentant un ratio atomique Si/Al égal à environ 1. On préfère tout particulièrement les zéolithes de type FAU X.

Les caractéristiques citées ci-dessus confèrent au matériau zéolithique sous forme de nanocristaux de zéolithe(s) agrégés selon la présente invention, des propriétés améliorées et tout à fait surprenantes et intéressantes, par rapport aux matériaux zéolithiques connus de l'art antérieur. En particulier, ces agrégats de nanocristaux zéolithiques présentent une mésoporosité intercristalline tout à fait intéressante pour encore améliorer les propriétés de transfert dans les applications où de telles propriétés sont recherchées.

Par « mésopores intercristallins », on entend les cavités de diamètre supérieur à environ 2 nm qui sont observées entre les cristaux pleins agrégés/agglomérés entre eux. Par « cristaux pleins », on entend des cristaux sans mésoporosité apparente, c'est-à-dire invisible au microscope électronique à transmission, selon la technique analytique, explicitée plus loin dans la description.

La taille des agrégats de nanocristaux de zéolithe(s) selon la présente invention est exprimée par leur diamètre moyen en nombre par observation au microscope électronique à balayage (MEB), comme indiqué plus loin.

La taille des nanocristaux de zéolithe(s) formant les agrégats selon la présente invention est également exprimée par leur diamètre moyen en nombre par observation au microscope électronique à balayage (MEB), comme indiqué plus loin. L'invention présente également l'avantage de permettre d'ajuster et de régler à la fois la taille des nanocristaux et la taille des agrégats, notamment en fonction des conditions de synthèse explicitées ci-après, et en particulier en fonction de l'agent de nucléation et de l'agent de contrôle.

Dans la présente invention, la surface externe est mesurée à partir de l'isotherme d'adsorption d'azote par la méthode du t-plot décrite plus loin en appliquant l'équation de Harkins et Jura.

Les agrégats de nanocristaux de zéolithe(s) selon l'invention sont des solides comportant un réseau microporeux relié à un réseau de mésopores intercristallins, et permettent ainsi de concilier les propriétés d'accessibilité aux sites actifs des zéolithes et celles de cristallinité et de microporosité desdites zéolithes. Ainsi les nanocristaux de zéolithe(s) de la présente invention présentent des propriétés inattendues et ouvrent de nouvelles perspectives quant à leurs domaines d'applications industrielles.

En outre les agrégats de nanocristaux de zéolithe(s) de la présente invention peuvent être soumis à un ou plusieurs échanges cationiques (par exemple avec des sel(s) de métaux alcalins ou alcalino-terreux), selon des techniques d'échanges ioniques bien connues de l'homme du métier et couramment réalisées sur des matériaux zéolithiques. On préfère ainsi les agrégats de nanocristaux de zéolithe(s) de la présente invention ou les sites échangeables des zéolithes sont occupés par des ions choisis parmi hydronium, lithium, sodium, potassium, calcium, baryum, et autres, de préférence encore parmi les ions lithium, sodium, potassium, calcium, et baryum.

Selon un deuxième aspect, la présente invention concerne le procédé de préparation des agrégats de nanocristaux de zéolithe(s) telles qu'ils viennent d'être décrits. Le procédé de l'invention présente notamment les avantages d'être de mise en œuvre aisée, facilement transposable à l'échelle industrielle, et ceci notamment en raison des rendements matières de synthèse élevés, de la robustesse du procédé et de sa rapidité.

Plus particulièrement, le procédé de synthèse desdits agrégats de nanocristaux de zéolithe(s) selon l'invention met en œuvre à la fois un agent de contrôle et une étape d'ensemencement avec un agent de nucléation, tel que gel, cristal, particule minérale, et autres, comme explicité plus loin dans la description de la présente invention.

Par « agent de contrôle », on entend un composé chimique permettant de contrôler la croissance cristalline des cristaux de zéolithe(s), tout en permettant d'obtenir une cristallinité optimale. Les agents de contrôle qui peuvent être mis en œuvre dans le procédé de la présente invention sont avantageusement choisis parmi les tensio-actifs, les agents structurants, les inhibiteurs de croissance de cristaux, les agents dispersants, et autres composés chimiques couramment utilisés dans la synthèse de matériaux zéolithiques.

Selon un aspect préféré, les agents de contrôle qui peuvent être mis en œuvre dans le procédé de la présente invention comportent au moins un atome de silicium, de préférence encore sont choisis parmi les composés organo-silylés, mieux encore parmi les organo-silanes. Selon un autre aspect préféré, les agents de contrôle sont des composés comportant au moins un atome d'azote, et de préférence encore au moins une fonction amine, et de préférence encore au moins une fonction ammonium. Parmi les agents de contrôle tout à fait préférés, on peut citer les organo-silanes fonctionnalisés par au moins une fonction amine et/ou ammonium.

Plus précisément, le procédé de préparation des agrégats de nanocristaux de zéolithe(s) selon l'invention comprend au moins les étapes suivantes :

a) préparation d'un gel dit de croissance, par mélange d'une source de silice avec une source d'alumine, à une température comprise entre 0°C et 60°C,
b) ajout au gel de croissance de l'étape a) d'un agent de nucléation, à une température comprise entre 0°C et 60°C,
c) ajout dans le milieu réactionnel d'au moins un agent de contrôle,
d) réaction de cristallisation par augmentation de la température,
e) filtration et lavage des cristaux de zéolithe obtenue, et
f) séchage et calcination.

Il doit être compris que l'étape c) d'ajout d'agent(s) de contrôle peut être opérée en même temps que les étapes a) et/ou b) ou encore avant et/ou après les étapes a) et/ou b). Dans tous les cas, on préfère que l'agent de contrôle soit présent dans le milieu réactionnel avant l'étape d) de cristallisation. On préfère cependant ajouter l'agent de contrôle après l'étape b). En outre, un temps de latence (temps de repos, avec ou sans agitation) peut être prévu entre les étapes a), b), c) et d).

Selon un aspect préféré, le gel de croissance comprend un mélange homogène d'une source de silice (par exemple du silicate de sodium), une source d'alumine (par exemple alumine trihydratée), une base minérale forte, telle que par exemple l'hydroxyde de sodium, de potassium, ou de calcium pour ne citer que les principales et les plus communément utilisées, et de l'eau.

Le procédé de la présente invention se caractérise par l'utilisation de la technique d'ensemencement (étape b)) avec au moins un agent de nucléation bien connu de l'homme de métier, par exemple choisi parmi un gel de nucléation, un cristal, par exemple un cristal de zéolithe, une particule minérale de toute nature, par exemple une argile telle que par exemple et de manière non limitative kaolin, méta-kaolin, ou autre, et autres, ainsi que leurs mélanges.

Selon un aspect préféré, l'agent de nucléation est un gel de nucléation et de préférence encore, ledit gel de nucléation comprend un mélange homogène d'une source de silice (par exemple du silicate de sodium), une source d'alumine (par exemple alumine trihydratée), une base minérale forte, telle que par exemple l'hydroxyde de sodium, de potassium, ou de calcium pour ne citer que les principales et les plus communément utilisées, et de l'eau.

L'homogénéité du mélange (gel de croissance et/ou gel de nucléation) peut être obtenue selon tout procédé bien connu de l'homme du métier, et par exemple et à titre non limitatif à l'aide d'un agitateur à pales, d'un mixeur, ou encore à l'aide d'un mélangeur de type vis d'Archimède comme décrit dans le brevet EP0818418.

À titre d'exemple non limitatif, dans un réacteur de 3 litres, avec une vis d'Archimède dont la rotation est fixée à 300 tr.min$^{-1}$, une homogénéité satisfaisante est obtenue entre quelques minutes et quelques dizaines de minutes, généralement entre 20 minutes et 30 minutes.

Le mélange est préparé généralement à des températures comprises entre 0°C et 60°C, de préférence entre 10°C et 40°C, et pour des raisons pratiques et économiques, le mélange est préparé de manière encore préférée à température ambiante, par exemple à 25°C. La période d'homogénéisation est alors généralement inférieure à 2 heures.

Comme indiqué précédemment, le procédé de la présente invention se caractérise notamment par l'addition au gel de croissance ainsi obtenu, d'un agent de nucléation, et de préférence d'un gel de nucléation selon le concept défini par exemple dans le brevet US3947482. La quantité ajoutée d'agent de nucléation peut varier dans de grandes proportions, et la quantité de gel de nucléation ajoutée peut généralement être comprise entre 0,1% et 20%, de préférence entre 0,5% et 15% en poids, de préférence encore entre 1% et 10% en poids, bornes incluses, par rapport au poids du gel de croissance.

Lorsque l'agent de nucléation est un cristal de zéolithe, il s'agit de préférence d'un cristal de zéolithe de même nature que la zéolithe que l'on souhaite synthétiser. Le diamètre moyen en nombre du cristal d'ensemencement (cristal de zéolithe) peut varier dans de grandes proportions, et par exemple est compris typiquement entre 0,1 $\mu$m et 10 $\mu$m,

de préférence entre 0,1 μm et 5 μm, de préférence encore entre 0,1 μm et 1 μm. Selon un mode de réalisation préféré, le cristal d'ensemencement (cristal de zéolithe) est introduit sous forme de suspension aqueuse. La quantité de cristaux d'ensemencement introduite peut également varier dans de grandes proportions et est généralement comprise entre typiquement 0,1% et 10% en poids par rapport au poids total de gel de croissance.

Le procédé selon la présente invention se caractérise également par une étape d'addition dans le mélange [gel de croissance/agent de nucléation] obtenu à l'étape b) d'au moins un agent de contrôle tel que défini précédemment.

Selon un mode de réalisation préféré, l'agent de contrôle est avantageusement choisi parmi les organosilanes et plus préférentiellement parmi le N-phénylaminopropyltriméthoxysilane (PHAPTMS, plus connu sous le nom commercial "SIP"), l'aminopropyltriméthoxysilane (APTMS), l'isobutyltriéthoxysilane (IBTES), l'octa-décyltriméthoxysilane (ODTMS), le chlorure de [3-(triméthoxysilyl)propyl]octadécyldi-méthylammonium, .

Parmi les agents de contrôle listés ci-dessus, on préfère tout particulièrement le N-phénylaminopropyltriméthoxysilane (SIP) et le chlorure de [3-(triméthoxysilyl)propyl]-octadécyldiméthylammonium (TPOAC).

En plus des agents de contrôle précités, il est possible d'ajouter, de manière simultanée ou séquencée, un ou plusieurs additifs oligomères ou polymères, tels que par exemple ceux choisis parmi les PPDA (Polymer Poly-DiallyldimethylAmmonium), PVB (PolyVinyl Butyral), les poly(éthylène glycol)-block-poly(propylène glycol)-block-poly(éthylène glycol), et par exemple ceux connus commercialement sous le nom Pluronic® P123 commercialisés par BASF.

La quantité d'agent(s) de contrôle utilisé(s) dans le procédé de la présente invention peut varier dans de grandes proportions et en général celle-ci est telle que le ratio molaire agent(s) de contrôle/$Al_2O_3$ de départ est compris entre 0,001 et 0,15, de préférence entre 0,001 et 0,12, bornes incluses.

Parmi les agents de contrôle listés ci-dessus, on préfère tout particulièrement le N-phénylaminopropyltriméthoxysilane (SIP).

Dans le cas des agents de contrôle qui sont des organosilanes ne comportant pas de fonction ammonium et décrits ci-dessus, on préfère mettre en œuvre un ratio molaire agent(s) de contrôle/$Al_2O_3$ de départ compris entre 0,01 et 0,15, de préférence entre 0,01 et 0,12, bornes incluses.

Parmi les agents de contrôle listés ci-dessus, on préfère tout particulièrement le chlorure de [3-(triméthoxysilyl)propyl]octadécyldiméthylammonium, ou TPOAC.

Dans le cas des organosilanes comportant au moins une fonction ammonium, comme décrits ci-dessus, on préfère en outre mettre en œuvre un ratio molaire agent(s) de contrôle/$Al_2O_3$ de départ compris entre 0,001 et 0,015, bornes incluses.

L'addition du ou des agent(s) de contrôle est réalisée sous agitation, par exemple comme indiqué précédemment à l'étape a), puis le mélange est soumis à une étape de maturation, préférentiellement sous agitation, toujours à la même température, par exemple à 25°C, sous agitation, pendant une durée variant de quelques minutes à plusieurs dizaines de minutes, typiquement pendant une heure.

Après cette étape de maturation, le mélange réactionnel est engagé dans l'étape d) de cristallisation, toujours sous agitation, mais plus lente, typiquement entre 20 tr.min$^{-1}$ et 100 tr.min$^{-1}$, par exemple à 50 tr.min$^{-1}$, et en augmentant la température jusqu'à une valeur généralement comprise entre 60°C et 100°C, par exemple 75°C. La durée nécessaire à la cristallisation est généralement comprise entre quelques heures et plusieurs dizaines d'heures, avantageusement entre 8 heures et 48 heures.

À l'issue de l'étape de cristallisation les nanocristaux de zéolithe sont extraits du milieu réactionnel par filtration, puis lavés avec un ou des solvant(s) adapté(s), aqueux et/ou organique(s), mais de préférence aqueux et enfin séchés entre 50°C et 150°C, selon les techniques habituelles connues de l'homme du métier.

La taille moyenne des nanocristaux et des agrégats peut notamment être contrôlée en ajustant la quantité et la nature de l'agent de nucléation (gel de nucléation, ou cristaux par exemple de zéolithe, ou autres) et/ou de l'agent de contrôle.

Les agrégats de nanocristaux séchés sont ensuite soumis à calcination, étape nécessaire pour obtenir un solide prêt à être utilisé dans les applications connues de l'homme du métier et qui mettent en œuvre des zéolithes. La calcination notamment mise en œuvre pour éliminer l'agent de contrôle peut être effectuée selon toute méthode de calcination connue de l'homme du métier. Par exemple, et de manière non limitative, la calcination des nanocristaux de zéolithe comprenant l'agent de contrôle peut être effectuée sous balayage gazeux oxydant et/ou inerte, avec notamment des gaz tels que l'oxygène, l'azote, l'air, un air sec et/ou décarbonaté, un air appauvri en oxygène, éventuellement sec et/ou décarbonaté, à une ou des températures supérieures à 150°C, typiquement comprises entre 180°C et 800°C, préférentiellement entre 200°C et 650°C, pendant quelques heures, par exemple entre 2 et 6 heures. La nature des gaz, les rampes de montée en température et les paliers successifs de températures, leurs durées seront adaptées en fonction de la nature de l'agent de contrôle.

On ne sortirait pas du cadre de l'invention en opérant un ou plusieurs échanges cationiques (par exemple avec des sel(s) de métaux alcalins ou alcalino-terreux), avant ou après l'étape de séchage et/ou de calcination (étape f)), selon les techniques classiques d'échanges cationiques.

Comme indiqué précédemment, le procédé de synthèse de l'invention est de mise en œuvre aisée et il est réalisé dans un temps relativement court, et notamment dans un temps réduit d'un facteur d'au moins 4, par rapport aux procédés de synthèse connus de l'art antérieur qui sont très longs, et/ou qui sont réalisés en milieu très dilué, ce qui nécessite la manutention de très grands volumes de liquides.

Cette simplicité et cette rapidité de synthèse ne nuisent cependant pas à la qualité et aux propriétés des agrégats de nanocristaux de zéolithe(s) ainsi obtenus. En effet, grâce au procédé de l'invention, il est possible d'augmenter la sélectivité de la synthèse vers une structure d'agrégats de nanocristaux de zéolithe(s).

En effet, avec les procédés de l'art antérieur, l'augmentation du volume microporeux de la zéolithe et le maintien d'une pureté de phase élevée, avec typiquement moins de 5%, de préférence moins de 2% de phase polluante (phase zéolithique autre que la zéolithe FAU), ne s'obtiennent qu'au moyen de temps de cristallisation très longs et à des températures relativement basses (< 80°C). Ces procédés n'atteignent toutefois jamais des volumes microporeux comparables à ceux de l'invention.

Ainsi, par rapport aux autres procédés de préparation d'agrégats de nanocristaux de zéolithe(s), le procédé de l'invention est plus productif et moins coûteux, car il est réalisé en une seule étape, d'une durée relativement courte (généralement de l'ordre d'environ une journée) avec une quantité d'agent de contrôle faible, et donc globalement avec un coût relativement faible, ou tout au moins avec un surcoût limité.

L'utilisation de ces agrégats de nanocristaux de zéolithe(s) est particulièrement avantageuse dans les procédés industriels tels que l'adsorption, l'échange ionique, la séparation, et peut également être envisagée dans tous les domaines techniques dans lesquels les zéolithes sont habituellement utilisées, et notamment le matériau zéolithique sous forme d'agrégats de nanocristaux de zéolithe(s) peut être utilisé en tant qu'adsorbant, en particulier pour les opérations de séparations en phase gazeuse ou en phase liquide, et plus particulièrement dans les procédés de séparation des flux gazeux ou liquides, tels que les procédés d'adsorption modulés en pression en phase gazeuse, les procédés d'adsorption modulés en température en phase gazeuse ou liquide, les procédés d'adsorption en lit fixe sans régénération, les procédés de séparation en lits mobiles simulés, pour ne citer que quelques exemples non limitatifs.

Il est en outre particulièrement avantageux, et notamment pour les applications citées ci-dessus, de préparer des matériaux zéolithiques solides, à partir des agrégats de nanocristaux de zéolithe(s) selon l'invention, par agglomération avec un liant. Le liant d'agglomération qui peut être utilisé est bien connu de l'homme du métier et peut être choisi parmi les argiles, les polymères organiques, les silices, les alumines, et autres, ainsi que les mélanges de deux ou plusieurs d'entre eux. Le liant utilisable dans le cadre de la présente invention peut donc être choisi parmi les liants classiques connus de l'homme du métier, zéolithisables ou non zéolithisables, et de préférence choisis parmi les argiles et les mélanges d'argiles, les silices, les alumines, les silices colloïdales, les gels d'alumine, et autres, et leurs mélanges.

Les argiles sont de préférence choisies parmi : kaolins, kaolinites, nacrites, dickites, halloysites, attapulgites, sépiolites, montmorillonites, bentonites, illites et métakaolins, ainsi que les mélanges de deux ou plusieurs d'entre elles en toutes proportions.

On peut également utiliser les argiles fibreuses de type sépiolite ou attapulgite, l'argile ou les argiles pouvant, de manière générale, être formulée(s) sous forme de poudres broyées à sec et sélectées, ou mieux de gel (i.e. argiles délaminées) et dispersées, et éventuellement broyées, tels que les argiles commerciales Min-U-Gel®, Pansil®, Pangel®, Cimsil®, Attagel®, Actigel®, etc., ayant ou non subi un ou plusieurs traitements chimiques. De tels gels sont par exemples décrits dans EP170299 ou US6743745.

La teneur en liant, exprimée en pourcentages anhydres, est inférieure ou égale à 30%, de préférence inférieure ou égale à 20%, et avantageusement inférieure ou égale à 15%.

Ainsi, et selon encore un autre aspect, l'invention concerne un aggloméré zéolithique comprenant au moins un matériau zéolithique sous forme d'agrégats de nanocristaux de zéolithe(s) FAU tel que défini précédemment et au moins un liant tel que défini précédemment, la teneur en liant étant inférieure ou égale à 30%, de préférence inférieure ou égale à 20%, et avantageusement inférieure ou égale à 15%. On ne sortirait pas du cadre de l'invention en opérant sur l'aggloméré zéolithique un ou plusieurs échanges cationiques, selon des méthodes bien connues de l'homme du métier, et par exemple comme décrit précédemment, notamment à l'aide de sel(s) de métaux alcalins ou alcalino-terreux.

L'aggloméré zéolithique défini ci-dessus peut être utilisé dans de très nombreuses applications et en particulier celles citées plus haut pour le matériau zéolithique sous forme d'agrégats de nanocristaux de zéolithe(s) de l'invention, entre autres dans les procédés industriels tels que l'adsorption, l'échange ionique, la séparation, mais aussi dans tous les domaines techniques dans lesquels les zéolithes sont habituellement utilisées, et notamment l'aggloméré comprenant les agrégats de nanocristaux de zéolithe(s) peut être utilisé en tant qu'adsorbant, en particulier pour les opérations de séparations en phase gazeuse ou en phase liquide, et tout particulièrement dans des procédés de séparation des flux gazeux ou liquides, tels que les procédés d'adsorption modulés en pression en phase gazeuse, les procédés d'adsorption modulés en température en phase gazeuse ou liquide, les procédés d'adsorption en lit fixe sans régénération, les procédés de séparation en lits mobiles simulés, pour ne citer que quelques exemples non limitatifs.

La présente invention est maintenant illustrée par les exemples qui suivent et qui sont présentés sans aucune intention de limiter les divers modes de réalisation de l'invention.

Dans les exemples qui suivent, les propriétés physiques des cristaux de zéolithe sont évaluées par les méthodes connues de l'homme du métier, dont les principales d'entre elles sont rappelées ci-dessous.

*Perte au feu des cristaux de zéolithe*

La perte au feu est déterminée en atmosphère oxydante, par calcination de l'échantillon à l'air à une température de 950°C $\pm$ 25°C, comme décrit dans la norme NF EN 196-2 (avril 2006). L'écart-type de mesure est inférieur à 0,1%.

*Volume de Dubinin-Raduskevitch :*

Le volume de Dubinin-Raduskevitch est déterminé à partir de la mesure de l'isotherme d'adsorption d'azote à sa température de liquéfaction. Préalablement à l'adsorption, l'adsorbant zéolithique est dégazé entre 300°C et 450°C pendant une durée comprise entre 9 heures et 16 heures, sous vide (P < 6,7.10$^{-4}$ Pa). La mesure des isothermes d'adsorption est ensuite effectuée sur un appareil de type ASAP 2020 de Micromeritics, en prenant au moins 35 points de mesure à des pressions relatives de rapport P/P0 compris entre 0,002 et 1. Le volume microporeux est déterminé selon Dubinin-Raduskevitch à partir de l'isotherme obtenu, en appliquant la norme ISO 15901-3 (2007). Le volume microporeux évalué selon l'équation de Dubinin-Raduskevitch s'exprime en cm$^3$ d'adsorbat liquide par gramme de zéolithe. L'incertitude de mesure est de $\pm$ 0,003 cm$^3$.g$^{-1}$.

*Taille et morphologie des cristaux (MEB)*

L'estimation du diamètre moyen en nombre des nanocristaux et des agrégats de nanocristaux de zéolithe(s) est réalisée comme indiqué précédemment par observation au microscope électronique à balayage.
Afin d'estimer la taille des nanocristaux de zéolithe sur les échantillons, on effectue un ensemble de clichés à un grossissement d'au moins 5000. On mesure ensuite le diamètre d'au moins 200 cristaux à l'aide d'un logiciel dédié, par exemple le logiciel Smile View de l'éditeur LoGraMi. La précision est de l'ordre de 3%.
La morphologie des nanocristaux et des agrégats de nanocristaux de zéolithe(s) est qualifiée à partir de photos MEB prises au grossissement adapté à la taille des solides observés.

*Observation de la structure mésoporeuse par Microscopie Électronique à Transmission (MET)*

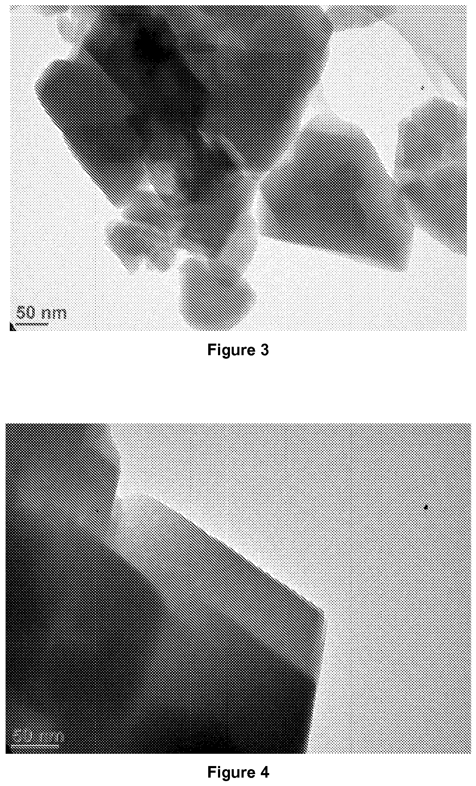

La poudre est dispersée dans l'éthanol : 1 minute sous ultrasons. On dépose une goutte de la solution sur une grille de microscopie. On laisse sécher l'échantillon à l'ambiante. L'observation se fait avec un microscope électronique à transmission (CM 200 de FEI) sous une tension de 120 kV.
Les grossissements obtenus de x 175000 (cf. Figure 3 et Figure 4) permettent de vérifier l'absence de mésopores intracristallins.
Dans la présente invention, on entend par « mésopores intracristallins », des cavités de diamètre supérieur à 2 nm situées à l'intérieur des cristaux et observées avec un microscope électronique à transmission. On entend par « mésopores intercristallins », des cavités de diamètre supérieur à 2 nm résultant de l'agrégation de cristaux pleins (sans mésoporosité intracristalline).

*Mesure de la surface externe (S ext. en m$^2$.g$^{-1}$) par la méthode dite du t-plot :*

La méthode de calcul t-plot exploite les données de l'isotherme d'adsorption d'azote Q ads = f (P/P0) et permet de calculer la surface microporeuse. On peut en déduire la surface externe en faisant la différence avec la surface BET qui mesure la surface poreuse totale en m$^2$.g$^{-1}$ (S BET = S microp. + S ext.).
Pour calculer la surface microporeuse (S microp.) par la méthode t-plot, on trace la courbe Q ads (cm$^3$.g$^{-1}$) en fonction de t = épaisseur de la couche dépendant de la pression partielle P/P0 qui se formerait sur un solide non poreux de référence (t fonction de log P/P0 : équation de Harkins et Jura appliquée (norme ISO 15901-3:2007)) :

$$[13,99/(0,034-\log(P/P0))^{1/2}],$$

où dans l'intervalle t compris entre 0,35 nm et 0,5 nm, on peut tracer une droite qui définit une ordonnée à l'origine Q adsorbée qui permet de calculer la surface microporeuse ; si le solide n'est pas microporeux la droite passe par 0.

*Analyse chimique élémentaire et analyse du rapport atomique Si/Al par fluorescence X*

Une analyse chimique élémentaire des solides (nanocristaux, agrégats de nanocristaux, agglomérés) peut être réalisée selon différentes techniques analytiques connues de l'homme du métier. Parmi ces techniques, on peut citer la technique d'analyse chimique par fluorescence de rayons X telle que décrite dans la norme NF EN ISO 12677 : 2011 sur un spectromètre dispersif en longueur d'onde (WDXRF), par exemple Tiger S8 de la société Bruker.

La fluorescence X est une technique spectrale non destructive exploitant la photoluminescence des atomes dans le domaine des rayons X, pour établir la composition élémentaire d'un échantillon. L'excitation des atomes généralement par un faisceau de rayons X ou par bombardement avec des électrons, génère des radiations spécifiques après retour à l'état fondamental de l'atome. Le spectre de fluorescence X a l'avantage de dépendre très peu de la combinaison chimique de l'élément, ce qui offre une détermination précise, à la fois quantitative et qualitative. On obtient de manière classique après étalonnage pour chaque oxyde une incertitude de mesure inférieure à 0,4% en poids.

Ces analyses chimiques élémentaires permettent de vérifier le rapport atomique Si/Al de la zéolithe, l'incertitude de mesure du ratio atomique Si/Al est de $\pm$ 5%.

*Analyses qualitative et quantitative par diffraction des rayons X*

Cette analyse permet d'identifier les phases cristallines présentes dans le solide analysé car chacune des structures zéolithiques possède un diffractogramme unique défini par le positionnement des pics de diffraction et par leurs intensités relatives.

Les agrégats de nanocristaux de zéolithe(s) sont étalés et lissés sur un porte échantillon par simple compression mécanique. Les conditions d'acquisition du diffractogramme réalisé sur l'appareil D5000 Brucker sont les suivantes :

- tube Cu utilisé à 40 kV - 30 mA ;
- taille des fentes (divergentes, de diffusion et d'analyse) = 0,6 mm ;
- filtre : Ni ;
- dispositif d'échantillon tournant : 15 tr.min$^{-1}$ ;
- plage de mesure : 3° < 2$\theta$ < 50°;
- pas : 0,02° ;
- temps de comptage par pas : 2 secondes.

L'interprétation du diffractogramme obtenu s'effectue avec le logiciel EVA avec identification des phases à l'aide de la base ICDD PDF-2, release 2011 qui permet de mettre en évidence une phase parfaitement cristalline.

La quantité des fractions zéolithiques X est mesurée par analyse par DRX. Cette analyse est réalisée sur un appareil de la marque Bruker, puis la quantité des fractions zéolithiques X est évaluée au moyen du logiciel TOPAS de la société Bruker.

**Exemple 1** (comparatif) :

**Synthèse avec gel de nucléation et gel de croissance, sans agent de contrôle**

a) *Préparation du gel de croissance dans réacteur agité avec vis d'Archimède.*

Dans un réacteur en inox de 3 litres muni d'une double enveloppe chauffante, d'une sonde température et d'un agitateur, on prépare un gel de croissance en mélangeant une solution d'aluminate contenant 119 g d'hydroxyde de sodium (NaOH), 128 g d'alumine trihydratée (Al$_2$O$_3$•3H$_2$O, contenant 65,2% en poids d'Al$_2$O$_3$) et 195,5 g d'eau à 25°C, en 25 minutes, avec une vitesse d'agitation de 300 tr.min$^{-1}$ dans une solution de silicate contenant 565,3 g de silicate de sodium, 55,3 g de NaOH et 1997,5 g d'eau à 25°C.

La stœchiométrie du gel de croissance est la suivante : 3,48 Na$_2$O / Al$_2$O$_3$ / 3,07 SiO$_2$ / 180 H$_2$O. L'homogénéisation du gel de croissance est réalisée sous agitation à 300 tr.min$^{-1}$, pendant 25 minutes, à 25°C.

b) *Ajout du gel de nucléation*

On ajoute au gel de croissance, à 25°C sous agitation à 300 tr.min$^{-1}$, 61,2 g de gel de nucléation (soit 2 % en poids) de composition 12 Na$_2$O/ Al$_2$O$_3$ / 10 SiO$_2$ / 180 H$_2$O préparé de la même manière que le gel de croissance, et ayant mûri pendant 1 heure à 40°C. Après 5 minutes d'homogénéisation à 300 tr.min$^{-1}$, la vitesse d'agitation est diminuée à 100 tr.min$^{-1}$ et poursuivie pendant 30 minutes.

c) *Cristallisation*

On abaisse la vitesse d'agitation à 50 tr.min$^{-1}$ et on fixe la consigne de la double enveloppe du réacteur à 80°C afin que le milieu réactionnel monte en température à 75°C en 80 minutes. Après 22 heures de palier à 75°C, on refroidit le milieu réactionnel en faisant circuler de l'eau froide dans la double enveloppe pour stopper la cristallisation.

*d) Filtration / lavage*

Les solides sont récupérés sur fritté puis lavés avec de l'eau permutée jusqu'à pH neutre.

*e) Séchage / Calcination*

Afin de caractériser le produit, le séchage est réalisé en étuve à 90°C pendant 8 heures, la perte au feu du produit séché est de 23% en poids.
On obtient une zéolithe X de rapport atomique Si/Al égal à 1,24, sous forme d'agrégats de très grandes dimensions.

**Exemple 2** (comparatif) :

**Synthèse de zéolithe X sans ajout de gel de nucléation, et avec ajout de gel de croissance, et ajout d'agent de contrôle : ratio SIP/Al$_2$O$_3$ = 0,02**

*a) Préparation du gel de croissance dans réacteur agité avec vis d'Archimède*

Dans un réacteur en inox de 3 litres muni d'une double enveloppe chauffante, d'une sonde température et d'un agitateur, on prépare un gel de croissance en mélangeant une solution d'aluminate contenant 119 g d'hydroxyde de sodium (NaOH), 128 g d'alumine trihydratée (Al$_2$O$_3$•3H$_2$O, contenant 65,2% en poids d'Al$_2$O$_3$) et 195,5 g eau à 25°C en 25 minutes avec une vitesse d'agitation de 300 tr.min$^{-1}$ dans une solution de silicate contenant 565,3 g de silicate de sodium, 55,3 g de NaOH et 1997,5 g d'eau à 25°C.
La stœchiométrie du gel de croissance est la suivante : 3,48 Na$_2$O / Al$_2$O$_3$ / 3,07 SiO$_2$ / 180 H$_2$O. L'homogénéisation du gel de croissance est réalisée sous agitation à 300 tr.min$^{-1}$, pendant 25 minutes, à 25°C.

*b) Introduction dans le milieu réactionnel de l'agent de contrôle*

On introduit dans le milieu réactionnel 4,4 g de SIP avec une vitesse d'agitation de 300 tr.min$^{-1}$ (ratio molaire SIP/Al$_2$O$_3$ = 0,02). On opère à 25°C une étape de maturation pendant 1 heure à 300 tr.min$^{-1}$ avant de démarrer la cristallisation.

*c) Cristallisation*

On abaisse la vitesse d'agitation à 50 tr.min$^{-1}$ et on fixe la consigne de la double enveloppe du réacteur à 80°C afin que le milieu réactionnel monte en température à 75°C en 80 minutes. Après 22 heures de palier à 75°C, on refroidit le milieu réactionnel en faisant circuler de l'eau froide dans la double enveloppe pour stopper la cristallisation.

*d) Filtration / lavage*

Les solides sont récupérés sur fritté puis lavés avec de l'eau permutée jusqu'à pH neutre.

*e) Séchage / Calcination*

Afin de caractériser le produit, le séchage est réalisé en étuve à 90°C pendant 8 heures, la perte au feu du produit séché est de 23% en poids.
On obtient une zéolithe X de rapport atomique Si/Al égal à 1,24, sous forme de gros cristaux, faiblement agrégés.

**Exemple 3** : (invention)

**Synthèse de zéolithe X avec ajout de gel de nucléation et gel de croissance, et agent de contrôle SIP/Al$_2$O$_3$ = 0,04**

*a) Préparation du gel de croissance dans réacteur agité avec vis d'Archimède*

Dans un réacteur en inox de 3 litres muni d'une double enveloppe chauffante, d'une sonde température et d'un agitateur, on prépare un gel de croissance en mélangeant une solution d'aluminate contenant 119 g d'hydroxyde de sodium (NaOH), 128 g d'alumine trihydratée (Al$_2$O$_3$•3H$_2$O, contenant 65,2% en poids d'Al$_2$O$_3$) et 195,5 g eau à 25°C en 25 minutes avec une vitesse d'agitation de 300 tr.min$^{-1}$ dans une solution de silicate contenant 565,3 g de silicate de sodium, 55,3 g de NaOH et 1997,5 g d'eau à 25°C.

La stœchiométrie du gel de croissance est la suivante : 3,48 Na$_2$O / Al$_2$O$_3$ / 3,07 SiO$_2$ / 180 H$_2$O. L'homogénéisation du gel de croissance est réalisée sous agitation à 300 tr.min$^{-1}$, pendant 25 minutes, à 25°C.

### b) Ajout du gel de nucléation

On ajoute au gel de croissance, à 25°C sous agitation à 300 tr.min$^{-1}$, 61,2 g de gel de nucléation (soit 2 % en poids) de composition 12 Na$_2$O/ Al$_2$O$_3$ / 10 SiO$_2$/ 180 H$_2$O préparé de la même manière que le gel de croissance, et ayant mûri pendant 1 heure à 40°C. Après 5 minutes d'homogénéisation à 300 tr.min$^{-1}$, la vitesse d'agitation est diminuée à 100 tr.min$^{-1}$ et poursuivie pendant 30 minutes.

### c) Introduction dans le milieu réactionnel de l'agent de contrôle

On introduit dans le milieu réactionnel 8,8 g de SIP avec une vitesse d'agitation de 300 tr.min$^{-1}$ (ratio molaire SIP/Al$_2$O$_3$ = 0,04). On opère à 25°C une étape de maturation pendant 1 heure à 300 tr.min$^{-1}$ avant de démarrer la cristallisation.

### d) Cristallisation

On abaisse la vitesse d'agitation à 50 tr.min$^{-1}$ et on fixe la consigne de la double enveloppe du réacteur à 80°C afin que le milieu réactionnel monte en température à 75°C en 80 minutes. Après 22 heures de palier à 75°C, on refroidit le milieu réactionnel en faisant circuler de l'eau froide dans la double enveloppe pour stopper la cristallisation.

### e) Filtration / lavage

Les solides sont récupérés sur fritté puis lavés avec de l'eau permutée jusqu'à pH neutre.

### f) Séchage / Calcination

Afin de caractériser le produit, le séchage est réalisé en étuve à 90°C pendant 8 heures, la perte au feu du produit séché est de 23% en poids.

On obtient des agrégats de nanocristaux de zéolithe X, agrégats dont le rapport atomique Si/Al est égal à 1,24.

### Exemple 3 bis : (invention)

**Synthèse de zéolithe X avec ajout de gel de nucléation et gel de croissance, et agent de contrôle : ratio SIP/Al$_2$O$_3$ = 0,12**

On réalise le même mode opératoire que l'exemple 3 mais en ajoutant 26,4 g de SIP au lieu de 8,8 g afin d'obtenir un ratio molaire SIP/Al$_2$O$_3$ égal à 0,12.

On obtient des agrégats de nanocristaux de zéolithe X, agrégats dont le rapport atomique Si/Al est égal à 1,24.

La Figure 3 montre un cliché MET de la zéolithe selon l'invention obtenue dans l'exemple 3 bis : on observe des cristaux pleins, sans mésopore intracristallin.

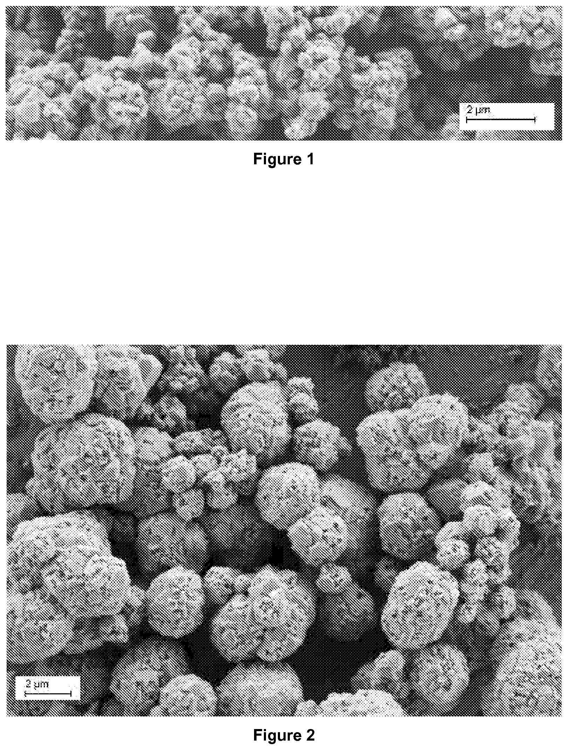

### Exemple 4 : (selon l'invention, Figure 1)

Synthèse de zéolithe X avec ajout de gel de nucléation et gel de croissance, et agent **de contrôle : ratio TPOAC/Al$_2$O$_3$ = 0,01**

### a) Préparation du gel de croissance dans réacteur agité avec vis d'Archimède

Dans un réacteur en inox de 50 litres muni d'une double enveloppe chauffante, d'une sonde température et d'un agitateur, on prépare un gel de croissance en mélangeant une solution d'aluminate contenant 1810 g d'hydroxyde de sodium (NaOH), 1930 g d'alumine trihydratée (Al$_2$O$_3$•3H$_2$O, contenant 65,2% en poids d'Al$_2$O$_3$) et 3000 g eau à 25°C en 25 minutes avec une vitesse d'agitation de 140 tr.min$^{-1}$ dans une solution de silicate contenant 8470 g de silicate de sodium, 835 g de NaOH et 30100 g d'eau à 25°C.

La stœchiométrie du gel de croissance est la suivante : 3,48 $Na_2O$ / $Al_2O_3$ / 3,07 $SiO_2$ / 180 $H_2O$. L'homogénéisation du gel de croissance est réalisée sous agitation à 140 tr.min$^{-1}$, pendant 25 minutes, à 25°C.

*b) Ajout du gel de nucléation*

On ajoute au gel de croissance, à 25°C sous agitation à 140 tr.min$^{-1}$, 923 g de gel de nucléation (soit 2 % en poids) de composition 12 $Na_2O$/ $Al_2O_3$/ 10 $SiO_2$/ 180 $H_2O$ préparé de la même manière que le gel de croissance, et ayant mûri pendant 1 heure à 40°C. Après 5 minutes d'homogénéisation à 140 tr.min$^{-1}$, la vitesse d'agitation est diminuée à 50 tr.min$^{-1}$ et poursuivie pendant 30 minutes.

*c) Introduction dans le milieu réactionnel de l'agent de contrôle*

On introduit dans le milieu réactionnel 102 g de solution de TPOAC à 60% dans le méthanol (MeOH) avec une vitesse d'agitation de 140 tr.min$^{-1}$ (ratio molaire TPOAC/$Al_2O_3$ = 0,01). On opère à 25°C une étape de maturation pendant 1 heure à 140 tr.min$^{-1}$ avant de démarrer la cristallisation.

*d) Cristallisation*

On abaisse la vitesse d'agitation à 35 tr.min$^{-1}$ et on fixe la consigne de la double enveloppe du réacteur à 80°C afin que le milieu réactionnel monte en température à 75°C en 80 minutes. Après 22 heures de palier à 75°C, on refroidit le milieu réactionnel en faisant circuler de l'eau froide dans la double enveloppe pour stopper la cristallisation.

*e) Filtration / lavage*

Les solides sont récupérés sur fritté puis lavés avec de l'eau permutée jusqu'à pH neutre.

*f) Séchage / Calcination*

Afin de caractériser le produit, le séchage est réalisé en étuve à 90°C pendant 8 heures, la perte au feu du produit séché est de 23% en poids.

On obtient des agrégats de nanocristaux de zéolithe X, agrégats dont le rapport atomique Si/Al est égal à 1,24.

**Exemple 5** : (comparatif)

**Synthèse de zéolithe X avec ajout de gel de nucléation et gel de croissance avec agent de contrôle : ratio TPOAC/Al$_2$O$_3$ = 0,02**

On réalise le même mode opératoire que l'exemple 4 mais en ajoutant 204 g de TPOAC à 60% dans du méthanol au lieu de 102 g afin d'obtenir un ratio molaire TPOAC/$Al_2O_3$ égal à 0,02.

On obtient des agrégats de cristaux de zéolithe X de grande taille, dont le rapport atomique Si/Al est égal à 1,24.

La Figure 4 montre un cliché MET de la zéolithe ainsi obtenue : on observe la présence de cavités mésoporeuses à l'intérieur des cristaux.

**Exemple 6** : (invention, Figure 2)

**Synthèse de zéolithe X avec ajout de micro-cristaux et gel de croissance, et avec agent de contrôle : ratio TPOAC/Al$_2$O$_3$ = 0,014**

On réalise le même mode opératoire que l'exemple 4 où dans l'étape b) le gel de nucléation est remplacé par l'introduction de 1% en poids de microcristaux (par rapport au poids total du gel de croissance) soit 462 g équivalent anhydre de cristaux de zéolithe X (cristaux d'ensemencement de diamètre moyen en volume d'environ 0,8 μm, préparé comme décrit dans l'exemple b) de synthèse de la demande WO2014/090771), et où dans l'étape c), la quantité d'agent de contrôle introduite dans le milieu réactionnel est de 142,8 g.

On obtient des agrégats de nanocristaux de zéolithe X, agrégats dont le rapport atomique Si/Al est égal à 1,24.

Les données relatives aux solides obtenus dans les exemples 1 à 6 ci-dessus sont rassemblées dans le Tableau 1 qui suit.

**Brève description des figures**

La Figure 1 est un cliché MEB du solide obtenu à l'exemple 4.
La Figure 2 est un cliché MEB du solide obtenu à l'exemple 6.
La Figure 3 est un cliché MET du solide obtenu à l'exemple 3 bis
La Figure 4 est un cliché MET du solide obtenu à l'exemple 5.

-- **Tableau 1** --

| Agent de contrôle | Exemple | Conditions opératoires des synthèses | | Caractéristiques des agrégats de nanocristaux de zéolite FAU | | | | |
|---|---|---|---|---|---|---|---|---|
| | | Type d'ensemencement | Rapport molaire agent de contrôle/ $Al_2O_3$ dans gel | Surface externe $(m^2.g^{-1})$ | Taille moyenne des nanocristaux (nm) | Taille moyenne des agrégats ($\mu$m) | $V_{DB}$ $(cm^3.g^{-1})$ | Diffract. |
| Sans | Exemple 1 (com paratif) | 2 % Gel Nucléation | 0 | - | | > 10 | 0,335 | X pure |
| SIP | Exemple 2 (com paratif) | Non | 0,02 | 25 | 900 | peu d'agrégats | 0,326 | X pure |
| | Exemple 3 (invention) | 2 % Gel Nucléation | 0,04 | 53 | 400 | 1 | 0,343 | X pure |
| | Exemple 3 bis (invention) | 2 % Gel Nucléation | 0,12 | 52 | 400 | 1,5 | 0,344 | X pure |
| TPOAC | Exemple 4 (invention) | 2 % Gel Nucléation | 0,01 | 65 | 300 | 2 | 0,351 | X pure |
| | Exemple 5 (com paratif) | 2 % Gel Nucléation | 0,02 | 85 | 650 | 2,5 | 0,339 | X pure |
| | Exemple 6 (invention) | 1 % Micro cristaux | 0,014 | 68 | 200 | 3,5 | 0,347 | X pure |

SIP = N-phénylaminopropyltriméthoxysilane TPOAC = chlorure de [3-(triméthoxysilyl)propyl]octadécyldiméthylammonium

$V_{DB}$ $(cm^3.g^{-1})$ = Volume de Dubinin-Raduskevitch exprimé en $cm^3.g^{-1}$,

Diffract. = Analyse qualitative et quantitative par diffraction des rayons X permettant d'identifier les phases cristallines présentes dans le solide analysé X pure = zéolithe FAU X avec moins de 2% de phase polluante.

**Revendications**

1. Matériau zéolithique sous forme d'agrégats de nanocristaux de zéolithe(s) FAU choisie(s) parmi les zéolithes X, MSX et LSX, présentant au moins les caractéristiques suivantes :

   • rapport atomique Si/Al compris entre 1 et 1,4, bornes incluses,
   • surface externe comprise entre 20 $m^2.g^{-1}$ et 80 $m^2.g^{-1}$, de préférence comprise entre 30 $m^2.g^{-1}$ et 80 $m^2.g^{-1}$, de préférence encore comprise entre 40 et 60 $m^2.g^{-1}$,
   • diamètre moyen en nombre des nanocristaux compris entre 50 nm et 500 nm, de préférence entre 50 nm et 400 nm, de préférence encore entre 100 nm et 400 nm, plus préférentiellement entre 100 nm et 300 nm, bornes incluses, et
   • taille moyenne en nombre des agrégats comprise entre 0,2 $\mu$m et 10 $\mu$m, de préférence entre 0,3 $\mu$m et 10 $\mu$m, de préférence encore entre 0,5 $\mu$m et 8 $\mu$m.

2. Matériau zéolithique selon la revendication 1, dans lequel les nanocristaux de zéolithe(s) sont des nanocristaux de zéolithe(s) de type FAU X.

3. Matériau zéolithique selon la revendication 1 ou la revendication 2, dans lequel les sites échangeables des zéolithes sont occupés par des ions choisis parmi hydronium, lithium, sodium, potassium, calcium, baryum, et autres, de préférence encore parmi les ions lithium, sodium, potassium, calcium, et baryum.

4. Procédé de préparation des agrégats de nanocristaux de zéolithe(s) selon l'une quelconque des revendications 1 à 3, comprenant au moins les étapes suivantes :

   a) préparation d'un gel dit de croissance, par mélange d'une source de silice avec une source d'alumine, à une température comprise entre 0°C et 60°C,
   b) ajout au gel de croissance de l'étape a) d'un agent de nucléation, à une température comprise entre 0°C et 60°C,
   c) ajout dans le milieu réactionnel d'au moins un agent de contrôle,
   d) réaction de cristallisation par augmentation de la température,
   e) filtration et lavage des cristaux de zéolithe obtenue, et
   f) séchage et calcination,

   dans lequel lorsque l'agent de contrôle mis en œuvre à l'étape c) est un organosilane ne comportant pas de fonction ammonium, le ratio molaire agent(s) de contrôle/$Al_2O_3$ de départ est compris entre 0,01 et 0,15, de préférence entre 0,01 et 0,12, bornes incluses, et lorsque l'agent de contrôle mis en œuvre à l'étape c) est un organosilane comportant au moins une fonction ammonium, le ratio molaire agent(s) de contrôle/$Al_2O_3$ de départ est compris entre 0,001 et 0,015, bornes incluses, étant entendu que l'agent de contrôle est choisi parmi le N-phénylaminopropyltriméthoxysilane (SIP), l'aminopropyltriméthoxysilane (APTMS), l'iso-butyltriéthoxysilane (IBTES), l'octadécyltriméthoxysilane (ODTMS), le chlorure de [3-(tri-méthoxysilyl)propyl]octadécyldiméthylammonium (TPOAC), et de préférence parmi le SIP et le TPOAC.

5. Procédé selon la revendication 4, dans lequel le gel de croissance comprend un mélange homogène d'une source de silice, une source d'alumine, une base minérale forte, et de l'eau.

6. Procédé selon l'une des revendications 4 ou 5, dans lequel l'agent de nucléation est choisi parmi un gel de nucléation, un cristal de zéolithe, une argile, ainsi que leurs mélanges.

7. Procédé selon l'une des revendications 4 à 6, dans lequel la quantité d'agent(s) de contrôle utilisé(s) est telle que le ratio molaire agent(s) de contrôle/$Al_2O_3$ de départ est compris entre 0,001 et 0,15, de préférence entre 0,001 et 0,12, bornes incluses.

8. Aggloméré zéolithique comprenant au moins un matériau zéolithique sous forme d'agrégats de nanocristaux de zéolithe(s) FAU selon l'une quelconque des revendications 1 à 3 et au moins un liant, la teneur en liant étant inférieure ou égale à 30%, de préférence inférieure ou égale à 20%, et avantageusement inférieure ou égale à 15%.

9. Utilisation d'un matériau selon l'une quelconque des revendications 1 à 3 ou d'un aggloméré selon la revendication 8, en tant qu'adsorbant, en particulier pour les opérations de séparations en phase gazeuse ou en phase liquide, et tout particulièrement dans les procédés de séparation du flux gazeux ou liquides, les procédés d'adsorption modulés en pression en phase gazeuse, les procédés d'adsorption modulés en température en phase gazeuse ou liquide, les procédés d'adsorption en lit fixe sans régénération, les procédés de séparation en lits mobiles simulés.

**Patentansprüche**

1. Zeolithmaterial in Form von Nanokristallaggregaten aus FAU-Zeolith(en), der bzw. die ausgewählt ist bzw. sind aus den Zeolithen X, MSX und LSX, das zumindest die folgenden Eigenschaften aufweist:

   • Atomverhältnis Si/Al zwischen 1 und 1,4, einschließlich der Grenzwerte,
   • äußere Oberfläche zwischen 20 $m^2.g^{-1}$ und 80 $m^2.g^{-1}$, vorzugsweise zwischen 30 $m^2.g^{-1}$ und 80 $m^2.g^{-1}$, noch bevorzugter zwischen 40 und 60 $m^2.g^{-1}$,
   • zahlengemittelter Durchmesser der Nanokristalle zwischen 50 nm und 500 nm, vorzugsweise zwischen 50 nm und 400 nm, noch bevorzugter zwischen 100 nm und 400 nm, bevorzugter zwischen 100 nm und 300 nm, einschließlich der Grenzwerte, und
   • zahlengemittelte Größe der Aggregate zwischen 0,2 $\mu$m und 10 $\mu$m, vorzugsweise zwischen 0,3 $\mu$m und 10 $\mu$m, noch bevorzugter zwischen 0,5 um und 8 $\mu$m.

2. Zeolithmaterial nach Anspruch 1, wobei es sich bei den Zeolithnanokristallen um Zeolithnanokristalle vom Typ FAU X handelt.

3. Zeolithmaterial nach Anspruch 1 oder Anspruch 2, wobei die Austauschplätze der Zeolithe von Ionen besetzt sind, die aus Hydronium, Lithium, Natrium, Kalium, Calcium, Barium und weiteren, noch bevorzugter aus Lithium-, Natrium-, Kalium-, Calcium- und Bariumionen ausgewählt sind.

4. Verfahren zur Herstellung von Zeolithnanokristallen nach einem der Ansprüche 1 bis 3, das mindestens folgende Schritte umfasst:

   a) Herstellen eines sogenannten Wachstumsgels durch Mischen einer Siliciumdioxidquelle mit einer Aluminiumoxidquelle bei einer Temperatur zwischen 0°C und 60°C,
   b) Zugeben eines Kristallisationskernbildungsmittels zum Wachstumsgel von Schritt a) bei einer Temperatur zwischen 0°C und 60°C,
   c) Zugeben von mindestens einem Steuerungsmittel in das Reaktionsmedium,
   d) Kristallisationsreaktion durch Erhöhen der Temperatur,
   e) Filtern und Waschen der erhaltenen Zeolithkristalle, und
   f) Trocknen und Kalzinieren,

   wobei, wenn es sich bei dem Steuerungsmittel, das in Schritt c) verwendet wird, um ein Organosilan handelt, das keine funktionelle Ammoniumgruppe aufweist, das Ausgangsmolverhältnis Steuerungsmittel/$Al_2O_3$ zwischen 0,01 und 0,15, vorzugsweise zwischen 0,01 und 0,12, einschließlich der Grenzwerte, liegt , und wenn es sich bei dem Steuerungsmittel, das in Schritt c) verwendet wird, um ein Organosilan handelt, das mindestens eine funktionelle Ammoniumgruppe aufweist, das Ausgangsmolverhältnis Steuerungsmittel/$Al_2O_3$ zwischen 0,001 und 0,015, einschließlich der Grenzwerte, liegt, wobei das Steuerungsmittel aus N-Phenylaminopropyltrimethoxysilan (SIP), Aminopropyltrimethoxysilan (APTMS), Isobutyltriethoxysilan (IBTES), Octadecyltrimethoxysilan (ODTMS), [3-(Trimethoxysilyl)propyl]octadecyldimethylammoniumchlori d (TPOAC) und vorzugsweise aus SIP und TPOAC ausgewählt wird.

5. Verfahren nach Anspruch 4, wobei das Wachstumsgel eine homogene Mischung aus einer Siliciumdioxidquelle, einer Aluminiumoxidquelle, einer starken Mineralbase und Wasser umfasst.

6. Verfahren nach einem der Ansprüche 4 oder 5, wobei das Kristallisationskernbildungsmittel aus einem Kristallisationskernbildungsgel, einem Zeolithkristall, einem Ton sowie ihren Mischungen ausgewählt wird.

7. Verfahren nach einem der Ansprüche 4 bis 6, wobei die Menge des bzw. der eingesetzten Steuermittel(s) derart ist, dass das Ausgangsmolverhältnis Steuermittel/$Al_2O_3$ zwischen 0,001 und 0,15, vorzugsweise zwischen 0,001 und 0,12, einschließlich der Grenzwerte, liegt.

8. Zeolithagglomerat, das mindestens ein Zeolithmaterial in Form von Nanokristallaggregaten aus FAU-Zeolith(en) nach einem der Ansprüche 1 bis 3 und mindestens ein Bindemittel umfasst, wobei der Gehalt an Bindemittel kleiner gleich 30%, vorzugsweise kleiner gleich 20% und vorteilhafterweise kleiner gleich 15% beträgt.

9. Verwendung eines Materials nach einem der Ansprüche 1 bis 3 oder eines Agglomerats nach Anspruch nach Anspruch 8 als Adsorptionsmittel, insbesondere für Trennvorgänge in der Gasphase oder Flüssigphase und ganz besonders in Verfahren zur Trennung von Gas- oder Flüssigkeitsströmen, Verfahren zur Druckwechseladsorption in der Gasphase, Verfahren zur Temperaturwechseladsorption in der Gas- oder Flüssigphase, Festbettadsorptionsverfahren ohne Regeneration, Trennverfahren in simulierten Bewegtbetten.

**Claims**

1. Zeolite material in the form of FAU zeolite nanocrystal aggregates chosen from zeolites X, MSX and LSX, having at least the following characteristics:

   • Si/Al atomic ratio of between 1 and 1.4, limits inclusive,
   • external surface area of between 20 $m^2.g^{-1}$ and 80 $m^2.g^{-1}$, preferably between 30 $m^2.g^{-1}$ and 80 $m^2.g^{-1}$, more preferably between 40 and 60 $m^2.g^{-1}$,
   • number-mean diameter of the nanocrystals of between 50 nm and 500 nm, preferably between 50 nm and 400 nm, more preferably between 100 nm and 400 nm, more preferentially between 100 nm and 300 nm, limits inclusive, and
   • number-mean aggregate size of between 0.2 $\mu$m and 10 $\mu$m, preferably between 0.3 $\mu$m and 10 $\mu$m, more preferably between 0.5 $\mu$m and 8 $\mu$m.

2. Zeolite material according to Claim 1, in which the zeolite nanocrystals are nanocrystals of zeolite(s) of FAU X type.

3. Zeolite material according to Claim 1 or Claim 2, in which the exchangeable sites of the zeolites are occupied by ions chosen from hydronium, lithium, sodium, potassium, calcium, barium, and the like, more preferably from lithium, sodium, potassium, calcium and barium ions.

4. Process for preparing the zeolite nanocrystal aggregates according to any one of Claims 1 to 3, comprising at least the following steps:

   a) preparing a "growth" gel, by mixing a source of silica with a source of alumina, at a temperature of between 0°C and 60°C,
   b) adding to the growth gel from step a) a nucleating agent, at a temperature of between 0°C and 60°C,
   c) adding to the reaction medium at least one control agent,
   d) crystallization reaction by increasing the temperature,
   e) filtering and washing the zeolite crystals obtained, and
   f) drying and calcination,

   in which, when the control agent used in step c) is an organosilane not including an ammonium function, the starting control agent (s)/$Al_2O_3$ mole ratio is between 0.01 and 0.15, preferably between 0.01 and 0.12, limits inclusive, and when the control agent used in step c) is an organosilane including at least one ammonium function, the starting control agent(s)/$Al_2O_3$ mole ratio is between 0.001 and 0.015, limits inclusive, it being understood that the control agent is chosen from N-phenylaminopropyltrimethoxysilane (SIP), aminopropyltrimethoxysilane (APTMS), isobutyltriethoxysilane (IBTES), octadecyltrimethoxysilane (ODTMS) and [3-(trimethoxysilyl)propyl]octadecyldimethylammonium chloride (TPOAC), and preferably from SIP and TPOAC.

5. Process according to Claim 4, in which the growth gel comprises a homogeneous mixture of a source of silica, a source of alumina, a strong mineral base, and water.

6. Process according to either of Claims 4 and 5, in which the nucleating agent is chosen from a nucleating gel, a zeolite crystal, a clay, and also mixtures thereof.

7. Process according to one of Claims 4 to 6, in which the amount of control agent (s) used is such that the starting control agent(s)/$Al_2O_3$ mole ratio is between 0.001 and 0.15, preferably between 0.001 and 0.12, limits inclusive.

8. Zeolite agglomerate comprising at least one zeolite material in the form of FAU zeolite nanocrystal aggregates according to any one of Claims 1 to 3 and at least one binder, the binder content being less than or equal to 30%, preferably less than or equal to 20% and advantageously less than or equal to 15%.

9. Use of a material according to any one of Claims 1 to 3 or of an agglomerate according to Claim 8, as an adsorbent, in particular for gas-phase or liquid-phase separation operations, and most particularly in processes for separating gaseous or liquid streams, gas-phase pressure-modulated adsorption processes, gas-phase or liquid-phase temperature-modulated adsorption processes, adsorption processes in a fixed bed without regeneration, and separation processes in simulated moving beds.

**Figure 1**

**Figure 2**

Figure 3

Figure 4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP 2009155187 B
- JP 2008230886 B
- US 2012100066 A
- US 20120227584 A
- CN 103214003
- EP 0818418 A
- US 3947482 A
- EP 170299 A
- US 6743745 B
- WO 2014090771 A

**Littérature non-brevet citée dans la description**

- Nanocrystals. **T. TAGO ; T. MASUDA.** Zeolite Nanocrystals - Synthesis and Applications. 2010, 326
- Synthesis and characterization of nanozeolites. **VUONG-GIA THANH.** mémoire de thèse. université de Laval, Décembre 2006
- **JUNSU JIN.** *Ind. Eng. Chem. Res.,* 2014, vol. 53, 3406-3411